Europäisches Patentamt

(19) European Patent Office

Office européen des brevets

(11) Publication number: **0 240 190 B1**

(12) **EUROPEAN PATENT SPECIFICATION**

(45) Date of publication of patent specification:
06.03.91 Bulletin 91/10

(51) Int. Cl.⁵: **B22C 7/02, B22C 9/04, B22D 17/14, B22D 17/22**

(21) Application number: 87302072.1

(22) Date of filing: 11.03.87

(54) Process for manufacturing ceramic sintered bodies and mold to be used therefor.

(30) Priority: 31.03.86 JP 70926/86

(43) Date of publication of application:
07.10.87 Bulletin 87/41

(45) Publication of the grant of the patent:
06.03.91 Bulletin 91/10

(84) Designated Contracting States:
DE FR SE

(56) References cited:
EP-A- 0 025 481
EP-A- 0 099 215
EP-A- 0 104 839
DE-A- 2 730 945

(73) Proprietor: NGK INSULATORS, LTD.
2-56, Suda-cho, Mizuho-ku
Nagoya-shi, Aichi 467 (JP)

(72) Inventor: Oda, Isao
19 Gokuraku 3-Chome Meito-ku
Nagoya City Aichi Pref. (JP)

(74) Representative: Paget, Hugh Charles Edward et al
MEWBURN ELLIS & CO. 2/3 Cursitor Street
London EC4A 1BQ (GB)

## Description

The present invention relates to a process for manufacturing high strength ceramic sintered engine parts and a mold to be used in the process. Particularly, the invention provides a process for manufacturing ceramic sintered engine parts with a complicated configuration making use of a mold comprising a low melting alloy.

Owing to superior properties of ceramic sintered bodies over metals, such as heat resistance, heat insulating properties, low thermal expansibility, hardwearing properties, corrosion resistance, etc., extensive trials have been made recently in applications of sintered bodies, particularly in automobile engine parts, etc.

Such engine parts, etc. often have a complicated shape and, particularly in the case of, for example, a ceramic body designed to have a hollow portion wider than an entrance thereto, generally the following processes have so far been adopted :

①a process which comprises molding a hollow body using a straight (cylindrical) center core, followed by scraping the inside wall of the molded hollow body before firing, to widen the inside hollow space, and

②a process which comprises molding using a split center core, followed by releasing the split core.

Furthermore, a process for manufacturing a ceramic mold itself using low melting alloys, as shown in EP-A-99215 (corresponding to JP-A-59-82,142) and a process for manufacturing a plaster mold using low melting alloys, as described in the JP-A-60-259,407, have recently been proposed.

However, the above-mentioned conventional processes① and② have disadvantages, such as a complexity, difficulties in precision molding, etc.

Further, in the processes of EP-A-99215 and JP-A-60-259,407, the low melting alloys are used for manufacturing the mold and not as a component of the mold.

As a result of research, in view of the difficulties as mentioned above in the conventional processes, the inventor has paid attention to low melting alloys which have not hitherto been used as a component of a mold for making ceramic engine parts and has succeeded in obtaining sintered bodies with a more complicated shape, by fabricating and utilizing a mold comprising a low melting alloy component.

The present invention is set out in claim 1.

Embodiments of the invention will now be described with reference to the accompanying drawings, wherein :

Fig. 1 illustrates a piston having a cavity, Fig. 1a being a plan view and Fig. 1b being a vertical sectional view on the plane X-X of Fig. 1a ;

Fig. 2 is a vertical sectional view of a center core made of a low melting alloy, for use in making the piston of Fig. 1 ;

Fig. 3 is a vertical sectional view showing the low melting alloy center core of Fig. 2 and ceramic powder covered by a mold ; and

Fig. 4 is a schematic vertical sectional view illustrating the molded body from Fig. 3 carrying the center core of Fig. 2.

The low melting alloy employed in the process according to the invention preferably comprises, as its main ingredient(s), at least one metal selected from the group consisting of lead, tin, bismuth, indium and cadmium, and particularly preferred are those comprising lead, tin or bismuth as the main ingredient.

The low melting alloys are those having a melting point temperature between 40°C and 250°C, preferably between 46°C and 180°C. If a low melting alloy having a melting point lower than 40°C is used, there will be a fear of its melting out during the molding step, according to the ambient temperature in the molding, and on the other hand, if a low melting alloy of a melting point exceeding 250°C is used, there will be a fear of collapse of the ceramic molded body during the melting step of the low melting alloy, due to the difference in thermal expansion between the low melting alloy and the ceramic molded body. Further, the reason why the temperature range between 46°C and 180°C is preferred is that melting operations of the low melting alloy in the above range are readily feasible.

Ceramic materials to be employed in the present invention are not particularly limited and various ceramic materials are employable among which SiC, $Si_3N_4$, $ZrO_2$, cordierite, magnesium.aluminium.silicate, etc. are generally used.

Further, when pressure molding the ceramic materials using a mold, it is preferred for this to be carried out by means of any one of press molding, hydrostatic pressure molding, press-cast molding and injection molding, with a molding pressure of generally 10 kg/cm² or more and preferably 100 kg/cm² or more. The reason why the molding pressure should be 10 kg/cm² or more is that, if the molding pressure is lower than 10 kg/cm², the molded body will have such a low compressed density that it is prone to disintegrate or break

2

off, and so a satisfactory molded body will not be obtained. Further, the reason why 100 kg/cm² or more pressure is preferred is that particularly when, as a molding process, the press molding, hydrostatic pressure molding or injection molding is selected, a dense molded body can be obtained.

In the process of the invention, at the outset, a precision casting or precision finish may be applied to a mold of which at least a part is made of a low melting alloy. Then, using this mold as a master form, a ceramic material is pressure molded whereby a desired shape is replicated to the ceramic material.

The pressure molding is performed at a mold temperature lower than the melting point temperature of the low melting alloy employed, i.e., in most cases room temperature is used. During the molding, therefore, since the low melting alloy used in the mold is kept solid and hard, even pressure molding with a very high molding pressure results in no shape deformation of the mold caused by pressure transformation. As described in the Example below, materiel is now removed from the ceramic body to shape it.

After removing the low melting alloy by heat-melting, a ceramic molded body with a complicated shape is obtained, which is then fired to produce the objective ceramic sintered body.

The present invention will be explained in more detail hereinafter by way of an example which is not intended to restrict the invention. In the example, "percent" and "part" mean by weight unless otherwise designated.

## Example

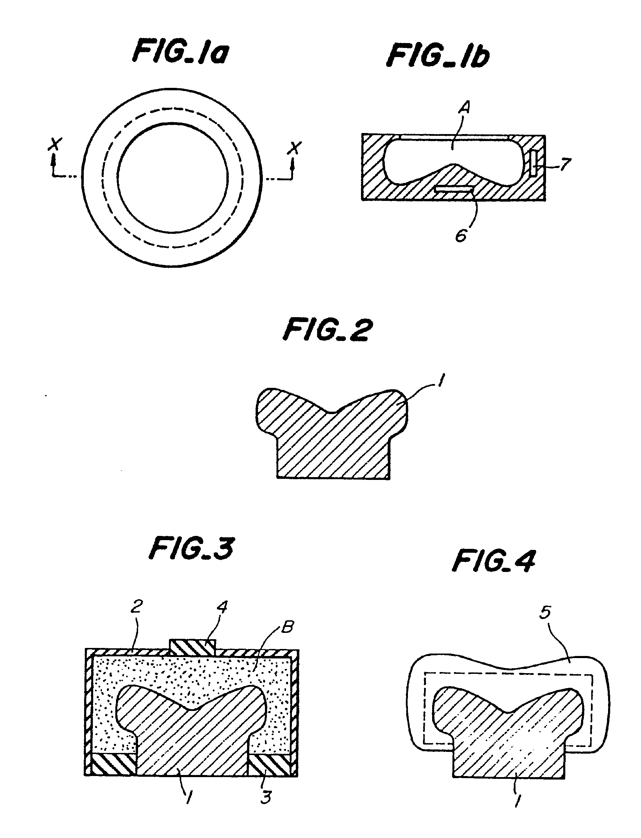

A low melting alloy having a melting point temperature of 46.7°C and a composition of 44.7% Bi, 22.6% Pb, 8.3% Sn, 5.3% Cd and 19.1% In, was melted in a dryer at 60°C, poured into a mold of 100 mm dia. × 30 mm length and solidified by cooling down, to produce a lump of the low melting alloy. As a part corresponding to piston cavity A as shown in Fig. 1a,b, a low melting alloy center core 1 as shown in Fig. 2 was formed by precision machinework from the lump.

On the other hand, as a ceramic material, to 100 parts of $Si_3N_4$ powder having an average particle dia. of 1 μm were added, as sintering aids, 3 parts of MgO, 2 parts of SrO and 4 parts of $CeO_2$, and mixed homogeneously. To 100 parts of the thus prepared ceramic powder, 60 parts of water were added to form a slip which was then dried by a spray dryer, yielding molding powder of 60 μm average particle dia. which was used as molding material B.

Then, in order to mold a piston cavity, as shown in Fig. 3, low melting alloy center core 1 was fixed by means of rubber stopper 3 in cylindrical rubber mold 2 having a predetermined form for molding a piston head, the space between rubber mold 2 and center core 1 was filled with the above-prepared ceramic material B which was introduced from an opening of rubber mold 2, and the opening was plugged up with rubber stopper 4. Then, a pressure of 5 tons/cm² was applied by means of hydrostatic pressing, and molded body 5 carrying low melting center core 1 as shown in Fig. 4 was obtained.

Further, the ceramic molded body 5 carrying low melting alloy center core 1 was finished by scraping the periphery of the molded body into a predetermined shape (such as shown by the broken line in Fig. 4), and then introduced into a dryer having its temperature maintained at 60°C, to melt away the low melting alloy center core 1. By subsequent firing in $N_2$ atmosphere at 1,700°C for 30 minutes, the desired piston cavity sintered body was obtained. No defects, such as stains, cracks, etc. due to the low melting alloy were observed anywhere in this piston cavity. Besides, the desired shape was able to be formed without any deformation.

From two portions 6 and 7 of the resultant sintered body, as shown in Fig. 1b, respective test-pieces of 1.5 mm × 2 mm × 20 mm size were cut out and tested for flexural strength and density. As a result, it was confirmed that an article of high strength and uniform quality with a density not lower than 95% of the theoretical density was able to be obtained, as shown in Table 1 below.

# EP 0 240 190 B1

## Table 1

| Sampling Portion | Flexural Strength (kg/mm²) | Density percent to Theoretical Density (%) |
|---|---|---|
| 6 | 105 | 96 |
| 7 | 100 | 95 |

Further, the melted out low melting alloy was reused for the same molding process as described above and the desired article could be obtained with no difficulties.

As was explained above, since a low melting alloy is used in a mold according to the process of the invention, no mold deformation will occur during pressure molding and, moreover, the low melting alloy can be readily melt-removed by heating, so that ceramic sintered bodies with a complicated shape can be obtained.

Further, a mold comprising a low melting alloy is easily recoverable and reproducible and, therefore, is very economically advantageous.

While there have been shown and described the preferred embodiments of the present invention, it will be obvious to those skilled in the art that various alterations and modifications thereof can be made.

## Claims

1. A process for manufacturing a high strength ceramic sintered engine part, which comprises pressure molding a ceramic material (B) with a mold (1, 2, 3, 4) at least a part (1) of which consists of a low melting alloy having a melting point between 40°C and 250°C to form a molded body (5) performing a shaping operation on said molded body (5) by removing material therefrom and thereafter removing the low melting alloy by heating to obtain a shaped molded body, and subsequently firing the shaped molded body into a sintered body.

2. A process as claimed in claim 1, wherein said melting point is between 46°C and 180°C.

3. A process as claimed in claim 1 or 2, wherein said pressure molding is performed at a mold temperature lower than the melting point of the low melting alloy.

4. A process as claimed in claim 1, 2 or 3 wherein the pressure molding is carried out with a molding pressure of at least 10 kg/cm².

5. A process as claimed in any one of claims 1 to 4, wherein the pressure molding is carried out by means of any one of press molding, hydrostatic pressure molding and injection molding.

6. A process as claimed in any one of claims 1 to 5 wherein the low melting alloy comprises, as its main ingredient(s), at least one metal selected from lead, tin, bismuth, indium and cadmium.

## Ansprüche

1. Verfahren zur Herstellung eines hochfesten gesinterten keramischen Motorenteils, umfassend das Druckformen eines keramischen Materials (B) mit einer Form (1, 2, 3, 4), von der zumindest ein Teil (1) aus einer bei niedriger Temperatur schmelzenden Legierung besteht, deren Schmelzpunkt zwischen 40 und 250°C liegt, um einen geformten Körper (5) zu bilden, Durchführen eines Formgebungsvorgangs an dem geformten Körper (5) durch Beseitigen von Material und anschließendes Beseitigen der niedrig schmelzenden Legierung durch Erhitzen, um einen geformten Formkörper zu erhalten und anschließendes Brennen des geformten Formkörpers zu einem gesinterten Körper.

2. Verfahren nach Anspruch 1, wobei der Schmelzpunkt zwischen 46 und 180°C liegt.

3. Verfahren nach Anspruch 1 oder 2, wobei das Druckformen bei einer Formtemperatur durchgeführt wird, die unter dem Schmelzpunkt der niedrig schmelzenden Legierung liegt.

4. Verfahren nach Anspruch 1, 2 oder 3, wobei das Druckformen mit einem Formdruck von mindestens 10 kg/cm² durchgeführt wird.

4

5. Verfahren nach einem der Ansprüche 1 bis 4, wobei das Druckformen durch Druckverformung, hydrostatische Druckverformung oder durch Spritzgießen durchgeführt wird.

6. Verfahren nach einem der Ansprüche 1 bis 5, wobei die niedrig schmelzende Legierung als Hauptbestandteil mindestens ein aus Blei, Zinn, Wismut, Indium und Cadmium ausgewähltes Metall enthält.

## Revendications

1. Procédé de fabrication d'une partie de moteur frittée en céramique, de résistance élevée, qui comprend le moulage par pression d'un matériau (B) en céramique à l'aide d'un moule (1, 2, 3, 4) dont au moins une partie (1) qui consiste en un alliage de basse fusion ayant un point de fusion compris entre 40°C et 250°C, pour former un corps moulé (5), la réalisation d'une opération de moulage sur le corps moulé (5) précité, en retirant le matériau de celui-ci et, par la suite, l'élimination de l'alliage de basse fusion par chauffage, pour obtenir un corps moulé usiné, et ultérieurement, la cuisson du corps moulé usiné dans un corps fritté.

2. Procédé selon la revendication 1, où le point de fusion précité est compris entre 46°C et 180°C.

3. Procédé selon les revendications 1 ou 2, où le moulage par pression précité est effectué à une température du moule inférieure au point de fusion de l'alliage de basse fusion.

4. Procédé selon la revendication 1, 2 ou 3, où le moulage par pression est réalisé avec une pression au moule d'au moins 10 kg/cm$^2$.

5. Procédé selon l'une quelconque des revendications 1 à 4, où le moulage par pression est réalisé par l'un quelconque des moyens de moulage par compression, de moulage par pression hydrostatique et de moulage par injection.

6. Procédé selon l'une quelconque des revendications 1 à 5, où l'alliage de basse fusion comprend comme principaux ingrédients, au moins un métal choisi parmi le plomb, l'étain, le bismuth, l'indium et le cadmium.

## FIG_Ia

## FIG_Ib

## FIG_2

## FIG_3

## FIG_4